# EUROPÄISCHE PATENTSCHRIFT

(11) **EP 0 446 735 B1**
(45) Veröffentlichungstag und Bekanntmachung des Hinweises auf die Patenterteilung: **11.01.1995**
(21) Anmeldenummer: 91103165.6
(22) Anmeldetag: 02.03.1991
(51) Int. Cl.: G07C 9/00

(54) **Vorrichtung zum Überwachen von Objekten**
Object monitoring device
Dispositif pour surveiller des objets

(30) Priorität: 09.03.1990 DE 4007453
(43) Veröffentlichungstag der Anmeldung: 18.09.1991
(73) Patentinhaber: TEMIC TELEFUNKEN microelectronic GmbH, 74072 Heilbronn (DE)
(72) Erfinder: Englmeier, Martin, Dipl.-Ing., W-8071 Lenting (DE)
(74) Vertreter: Maute, Hans-Jürgen, Dipl.-Ing.

(56) Entgegenhaltungen:
- EP-A- 0 287 686
- EP-A- 0 288 791
- GB-A- 2 163 324
- US-A- 4 012 583
- US-A- 4 600 829

## Beschreibung

Die Erfindung betrifft eine Vorrichtung zum Uberwachen von Objekten gemäß dem Oberbegriff des Patentanspruches 1 sowie die Verwendung einer solchen Vorrichtung.

Eine solche Vorrichtung ist aus der GB-A-2 163 324 bekannt, die einen Transponder beschreibt, der lediglich dann Signale sendet, wenn gleichzeitig ein Abfragesignal von dem Transponder detektiert wird. Befinden sich eine Vielzahl von solchen Transpondern im Bereich des das Abfragesignal erzeugenden Senders, melden sich alle Transponder gleichzeitig, was eine Überwachung jedes einzelnen Transponders verhindert.

Ferner ist aus der DE-PS 27 48 584 eine Identifizierungsvorrichtung zum Erfassen der Anwesenheit von zu einer Überwachungsstelle gelangenden Personen, Tieren oder Gegenständen bekannt. Hierbei ist der Überwachungsstelle ein HF-Sender und dem mit den zu identifizierenden Objekten jeweils verbundenen Detektierplättchen als Signalgeber ein auf die Frequenz des HF-Senders abgestimmter Resonanzkreis, ein Generator für binär-codierte Schaltsignale und ein mit dem Resonanzkreis gekoppeltes Schaltglied zugeordnet. Ferner wird die im Resonanzkreis empfangene HF-Spannung einerseits zur Steuerung des Generators für die binär-codierten Schaltsignale und andererseits in an sich bekannter Weise gleichgerichtet und gesiebt zur Erzeugung der für den Generator und das Schaltglied notwendigen Gleichspannung verwendet. Diese Vorrichtung hat den Vorteil, daß es keine Batterie mehr für das Speisen der Schaltungsanordnung in dem Detektierplättchen benötigt. Nachteilig ist wie bei der erstgenannten Druckschrift, daß sich diejenigen Objekte gleichzeitig melden, die sich im Bereich einer Überwachungsstelle befinden. Gemäß der DE-PS 29 46 942 kann dieses Problem mit einem Verfahren gelöst werden, mit dessen Hilfe eine Vielzahl von Kennzeichen zugehöriger Objekte gleichzeitig sicher identifizierbar sind. Diese Lösung erfordert jedoch einen hohen Schaltungsaufwand.

Der vorliegenden Erfindung liegt die Aufgabe zugrunde, eine Vorrichtung zum Überwachen von Objekten zu schaffen, die es über eine eigenständige Energieversorgung der Objekte ermöglicht, eindeutig jedes Objekt zu identifizieren, wobei trotzdem die Schaltungsanordnung einfach bleibt.

Diese Aufgabe wird durch die im kennzeichnenden Teil des Patentanspruches 1 angegebenen Merkmale gelöst.

Der wesentliche Vorteil dieser erfindungsgemäßen Vorrichtung besteht darin, daß zur Aktivierung der dem Objekt zugeordneten Sendeeinheit ein Energiespeicher als Betriebsspannungsquelle drahtlos mit elektrischer Energie geladen wird und anschließend die Sendeeinheit mit dem Aussenden von Sendesignalen unter gleichzeitiger Entladung des Energiespeichers beginnt. Hiernach ist die Sendedauer der Sendeeinheit zeitlich beschränkt und wird erst nach einer neuerlichen Aufladung des Energiespeichers wieder in Betrieb gesetzt. Daher wird ein Objekt, dessen Energiespeicher mangels Energie den Betrieb der zugehörigen Sendeeinheit nicht mehr aufrechterhalten kann, die Detektion eines anderen Objektes nicht mehr verhindern.

Gemäß einer bevorzugten Weiterbildung der Erfindung beginnt die Sendeeinheit sofort oder erst zeitverzögert nach der Ladephase zu senden.

Zur drahtlosen Übertragung von elektrischer Energie stellt der Energiesender einen auf eine bestimmte Ladefrequenz abgestimmten, von einem Oszillator gespeisten Schwingkreis dar, wobei der Energieempfänger als ein auf diese Ladefrequenz abgestimmter Resonanzkreis aufgebaut ist.

Gemäß einer weiteren Ausführungsform der Erfindung ist der Resonanzkreis des Energieempfängers mit einem Gleichrichterelement derart verbunden, daß die von dem Resonanzkreis aufgenommene elektrische Energie gleichgerichtet und dem Energiespeicher zugeführt wird.

Bei einer besonders bevorzugten Ausführungsform der Erfindung ist der Energieempfänger während des Ladens des Energiespeichers in unmittelbarer räumlicher Nachbarschaft zum Energiesender angeordnet. Hierdurch ergibt sich eine besonders effektive Kopplung mit der Folge, daß nur eine kurze Ladezeit nötig ist.

Besonders vorteilhaft ist eine solche Ausführungsform der Erfindung, bei der die Signalempfangseinheit nach dem Ende der Ladephase sofort in Betrieb geht. Der Gegenstand kann, nachdem der Energiespeicher geladen ist, sofort durch die Signalempfangseinheit detektiert werden.

Besonders vorteilhaft ist bei einer weiteren Ausbildung der Erfindung, daß die Sendeeinheit von einer Steuereinheit angesteuert wird und daß diese Steuereinheit ebenfalls von dem Energiespeicher elektrisch versorgt wird. Insbesondere wird die Sendeeinheit von einer solchen Steuereinheit derart angesteuert, daß sie getaktete Sendesignale erzeugt. Infolgedessen weist eine solche Vorrichtung einen geringen Strombedarf auf, womit auch der Energiespeicher nur auf einen geringen Energiebedarf hin dimensioniert zu werden braucht.

Weiterhin kann die Steuereinheit einer solchen Ausführungsform aus einer astabilen Kippstufe und einer nachgeschalteten Differenzierstufe derart aufgebaut sein, daß ein von der astabilen Kippstufe erzeugtes Rechtecksignal der Differenzierstufe zugeführt wird und daß schließlich ein zur Taktung der Sendeeinheit vorgesehener Transistorschalter von dem Ausgang dieser Differenzierstufe angesteuert wird. Hierdurch ist ein für die Taktung einfaches Schaltungskonzept gegeben.

Um gleichzeitig mehrere Objekte orten zu können, ist bei einer besonders bevorzugten Ausführungsform der Erfindung für die Sendeeinheiten eine gewisse Anzahl von Sendefrequenzen vorgesehen, wobei werksseitig gebildeten Gruppen von Objekten jeweils eine dieser Sendefrequenzen derart zugeordnet sind, daß die Sendeeinheiten der zu einer Gruppe gehörenden Objekten jeweils auf der gleichen Frequenz senden und ferner jedes Objekt eine Kennung zur Identifizierung der Sendefrequenz aufweist.

Hierzu sind die Empfangsfrequenzen der Signalempfangseinheiten auf diese Sendefrequenzen einstellbar.

Ferner ergibt sich zur gleichzeitigen Ortung mehrerer Objekte eine weitere vorteilhafte Ausführungsform der Erfindung dadurch, daß die Ladesignale des Energiesenders eine Codierung aufweisen, daß durch diese Codierung eine bestimmte Sendefrequenz der Sendeeinheit einstellbar ist und daß ebenfalls die Signalempfangseinheit auf dieser bestimmten Sendefrequenz empfangsbereit ist. Eine Weiterbildung dieser Ausführungsform besteht darin, daß zur Decodierung des codierten Ladesignales und zur Sendefrequenzeinstellung des Oszillators der Sendeeinheit ein Mikroprozessor vorgesehen ist, der seinerseits einen Decodierer, einen programmierbaren Frequenzteiler und einen PLL-Schaltkreis ansteuert.

Gemäß einer weiteren bevorzugten Ausführungsform der Erfindung bilden der Energiesender und die Signalempfangseinheit eine Einheit, wobei zur Steuerung derselben eine monostabile Kippstufe vorgesehen ist und nur während des instabilen Zustandes der monostabilen Kippstufe der Energiesender aktiv und die Signalempfangseinheit inaktiv ist und umgekehrt nur während des stabilen Zustandes dieser monostabilen Kippstufe die Signalempfangseinheit empfangsbereit ist. Hierdurch kann sowohl das Laden als auch das Detektieren in vorteilhafter Weise über ein Handgerät erfolgen.

Zur Ortung eines Objektes führt die Auswerteschaltung gemäß des Anspruches 18 ein von der Feldstärke des Sendesignales abhängiges Signal einer Anzeigeeinheit zu, wobei der Wert dieser Feldstärke von der Orientierung einer der Signalempfangseinheit zugeordneten Antenne und deren Entfernung vom zu ortenden Objekt abhängt.

Insbesondere kann zur besseren Feststellung der Richtcharakteristik die Signalempfangseinheit bei einer anderen vorteilhaften Fortbildung der Erfindung mit einem Mehrantennen-Diversity-System ausgerüstet werden, wobei gemäß einer weiteren Fortbildung dieser Ausführungsform die Anzeigeeinheit unabhängig von der Orientierung der Antennen die Richtung angibt, in der das zu ortende Objekt sich befindet.

Des weiteren kann die Anzeigeeinheit so ausgestaltet werden, daß sie optische und/oder akustische Signale abgibt.

Bei einer weiteren bevorzugten Ausführungsform der Erfindung ist der Energiespeicher ein Kondensator.

Die erfindungsgemäße Vorrichtung kann in vorteilhafter Weise zur Ortung von verlorenen Objekten, insbesondere solcher aus dem Freizeitbereich, eingesetzt werden. Hierbei ist an Freiflugmodelle, Fluggeräte, beispielsweise Bumerangs, zu denken. Auch ist die erfindungsgemäße Vorrichtung zum Wiederauffinden von verschlagenen Golfbällen geeignet.

Weiterhin kann die erfindungsgemäße Vorrichtung auch als Überwachungssystem für Objekte in einer Produktionslinie mit mehreren Signalempfangseinheiten eingesetzt werden, um jederzeit festzustellen, an welcher Stelle der Produktionslinie sich ein bestimmtes Objekt im Augenblick befindet.

Schließlich kann die erfindungsgemäße Vorrichtung auch für eine zeitlich begrenzte Nutzungsberechtigung verwendet werden, also zur zeitlich begrenzten Nutzung von Räumen im Sinne einer Zugangsberechtigung oder zur zeitlich begrenzten Nutzung von Anlagen, beispielsweise von Autowaschanlagen und Reinigungsanlagen für Autos oder Kleiderschränken in Sportanlagen.

Im nachfolgenden wird die Erfindung anhand von mehreren Ausführungsbeispielen unter Hinweis auf die Zeichnungen näher erläutert. Es zeigt:
- Figur 1: ein Blockschaltbild eines Ausführungsbeispieles der erfindungsgemäßen Vorrichtung,
- Figur 2: ein Blockschaltbild eines Ausführungsbeispieles einer dem zu überwachenden Objekt zugeordneten Schaltung mit einer Sendefrequenzeinstellung,
- Figur 3: ein Blockschaltbild eines weiteren Ausführungsbeispieles einer der Figur 2 entsprechenden Schaltung mit einem Zähler zur exakten Begrenzung der Sendedauer,
- Figur 4: eine schematische Darstellung eines Anwendungsbeispieles der erfindinngsgemäßen Vorrichtung, und
- Figur 5: ein Blockschaltbild eines Ausführungsbeispieles einer die Signalempfangseinheit und Ladeschaltung umfassenden Einheit der erfindungsgemäßen Vorrichtung.

In den Figuren sind einander entsprechende Teile mit den gleichen Bezugszeichen versehen.

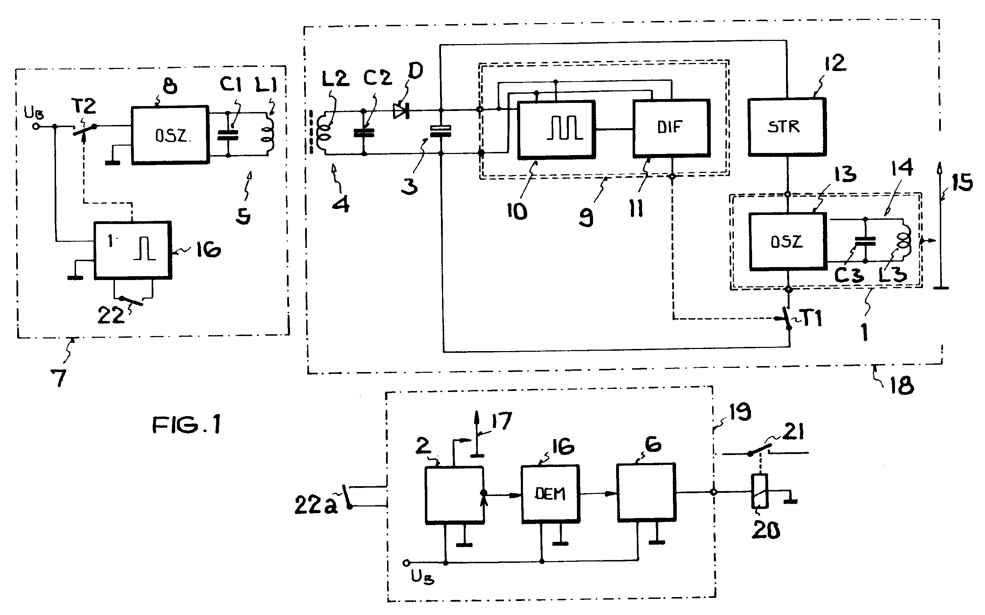

Die Figur 1 zeigt eine Ladeschaltung 7, eine Schaltungsanordnung 18 mit der Sendeeinheit 1 sowie eine Schaltungsanordnung 19 mit einer Signalempfangseinheit 2. Die Ladeschaltung 7 enthält einen Energiesender 5, der als Parallelschwingkreis mit einer Schwingkreisspule L1 und einem Schwingkreiskondensator C1 aufgebaut ist. Die Schaltungsanordnung 18 dagegen umfaßt einen als Parallelschwingkreis mit einer Spule L2 und einem Kondensator C2 aufgebauten Energieempfänger 4. Der Kondensator C2 des Energieempfängers 4 ist über eine Diode D mit einem Speicherkondensator 3 verbunden, der als Energiespeicher dient. Der Energiesender 5 ist mit einem Oszillator 8 verbunden und auf eine bestimmte Ladefrequenz abgestimmt. Die von diesem Energiesender abgestrahlte Energie wird von dem Energieempfänger 4 empfangen, von der Diode D gleichgerichtet und auf dem Speicherkondensator 3 gespeichert, der dann als Betriebsspannungsquelle für die nachgeschalteten Komponenten, in diesem Fall eine Steuereinheit 9 und eine Konstantstromquelle 12, dient. Während der Ladephase des Speicherkondensators 3 sind der Energiesender 5 und der Energieempfänger 4 räumlich benachbart angeordnet, was in der Figur 1 durch eine zeichnerische Nachbarschaft dieser beiden Parallelkreise angedeutet ist. Hierdurch ergeben sich reproduzierbare Ladeverhältnisse mit der Folge, daß die Ladedauer über eine monostabile Kippstufe 16 der Ladeschaltung 7 auf eine bestimmte Zeitdauer einstellbar ist. Diese Kippstufe 16 betätigt einen Transistorschalter T2, der seinerseits den Oszillator 8 mit einer Betriebsspannungsquelle U_{B} verbindet. Wird nun über einen Schalter 22 die Kippstufe 16 aktiviert, so schließt diese Kippstufe 16 während ihres nichtstabilen Zustandes den Transistorschalter T2, so daß hierdurch der Oszillator 8 zu schwingen anfängt, womit die Ladephase auf die Zeitdauer des nichtstabilen Zustandes der monostabilen Kippstufe 16 beschränkt ist.

Sobald der Energiespeicher 3 aufgeladen ist, beginnen die nachgeschalteten Komponenten 9 und 12 und insbesondere die Sendeeinheit 1 zu arbeiten, d. h. über die Antenne 15 der Sendeeinheit 1 werden Sendesignale abgestrahlt. Die Sendeeinheit 1 ist aus einem Oszillator 13 aufgebaut, der einen Schwingkreis 14, bestehend aus einem Kondensator C3 und einer Spule L3, ansteuert. Der Oszillator 13 ist mit der Konstantstromquelle 12 verbunden, die trotz einer abnehmenden Betriebsspannung den Oszillator 13 mit einem Konstantstrom versorgt. Der Oszillator 13 ist ferner über einen Transistorschalter T1 mit dem Speicherkondensator 3 verbunden, um zwecks Energieeinsparung ein getaktetes Sendesignal zu erzeugen. Deshalb wird der Schaltertransistor T1 mit von der Steuereinheit 9 erzeugten Taktimpulsen angesteuert. Diese Steuereinheit 9 umfaßt eine astabile Kippstufe 10 und einer dieser nachgeschalteten Differenzierstufe 11. Der Ausgang dieser Differenzierstufe 11 ist mit dem Transistorschalter T1 verbunden. Zur Energieversorgung ist diese Kippstufe 10 als auch die Differenzierstufe 11 mit dem Energiespeicher 3 verbunden, wobei auch der Signaleingang der astabilen Kippstufe 10 ebenfalls mit diesem Speicherkondensator 3 verbunden ist. Am Ausgang der astabilen Kippstufe 10 steht eine rechteckförmige Schwingung mit einem Tastverhältnis von 1:1 zur Verfügung, die von der Differenzierstufe 11 zur Erzeugung von kurzen Impulsen differenziert wird.

Die von der Sendeantenne 15 abgestrahlten getakteten Sendesignale werden von einer Empfangsantenne 17 der Signalempfangseinheit 2 der Schaltungsanordnung 19 bei geschlossenem Schalter 22a empfangen. Dieser Signalempfangseinheit 2 ist ein Demodulator 16 und eine Auswerteeinheit 6 nachgeschaltet, wobei diese genannten Komponenten von einer Betriebsspannung U_{B} versorgt werden. Der Ausgang der Auswerteschaltung 6 führt auf ein Relais 20, dessen Relaiskontakt 21 weitere Steuerungen vornehmen kann. Entsprechende Anwendungsbeispiele sind weiter unten erläutert.

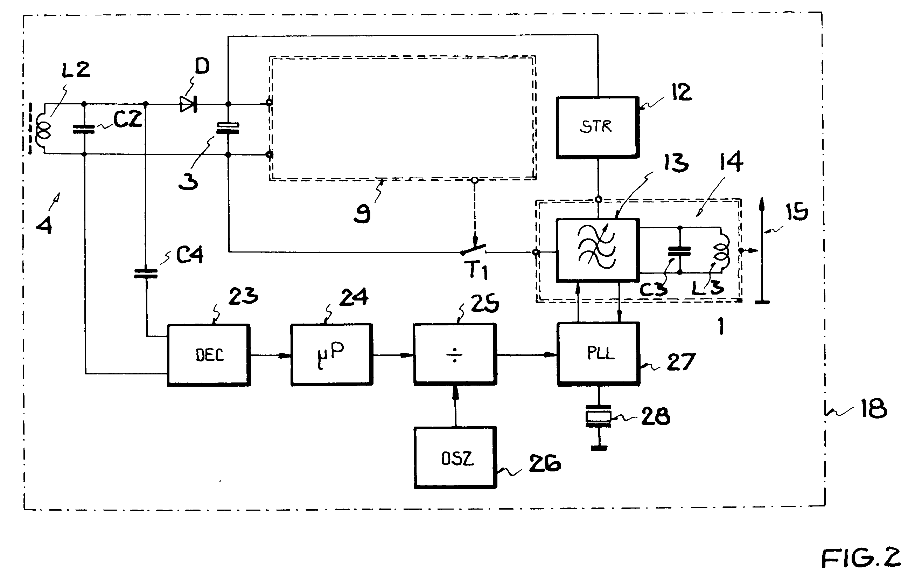

Die Figur 2 zeigt eine Schaltungsanordnung 18 mit einer Sendeeinheit 1 mit der Möglichkeit, bestimmte Sendefrequenzen einzustellen, um hierdurch verschiedene Objekte gleichzeitig detektieren zu können. Dies wird dadurch realisiert, daß das Ladesignal des Energiesenders 5 ein codiertes Signal, beispielsweise PCM-moduliert, darstellt. Dieses von dem Energieempfänger 4 aufgenommene Ladesignal wird gemäß der Figur 2 an dem Schwingkreiskondensator C2 abgegriffen und über einen Koppelkondensator C4 einem Decodierer 23 zugeführt. Ein Mikroprozessor 24 wertet die decodierten Signale aus und steuert seinerseits einen Frequenzteiler 25 entsprechend der in dem empfangenen Ladesignal codierten Frequenz. Der von einem Oszillator 26 versorgte programmierbare Frequenzteiler 25 steuert eine PLL-Schaltung 27 an, die ihrerseits den spannungsgesteuerten Oszillator 13 der Sendeeinheit 1 ansteuert. Die PLL-Schaltung 27 wird von einem Schwingquarz 28 mit einer Bezugsfrequenz versorgt. Zur Erzeugung von PCM-modulierten Ladesignale durch die Ladeschaltung 7, enthält diese entsprechende Schaltungsmittel, die dem Fachmann an sich bekannt sind und deshalb hier nicht weiter erläutert werden sollen. In gleicher Weise enthält die Signalempfangseinheit 2 der Schaltungsanordnung 19 Einstellmöglichkeiten zum Empfang der verschiedenen Frequenzen.

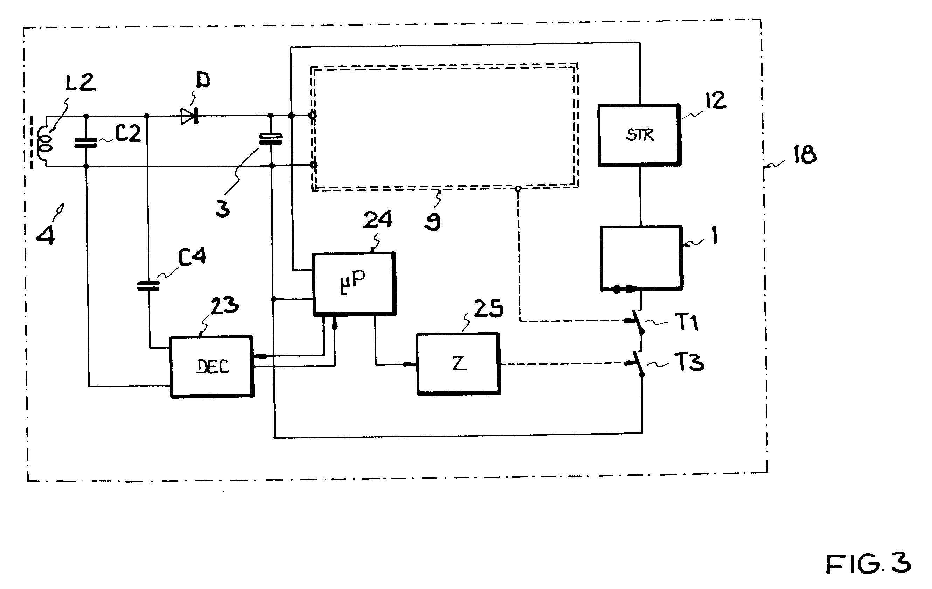

In Figur 3 ist nun eine Schaltungsanordnung 18 mit einer Sendeeinheit 1 dargestellt, bei der die Sendeeinheit 1 eine genau definierte Zeitdauer in Betrieb ist. Diese definierte Zeitdauer wird durch einen Zähler 29 gemäß der Figur 3 definiert, der beispielsweise ein Abwärtszähler darstellt. Nach der Ladephase beginnt ein solcher Zähler 29 mit seinem Zählvorgang, währenddessen ein Transistorschalter T3 durchgeschaltet ist und somit die Sendeeinheit 1 in Betrieb ist. Nachdem der Zählvorgang beendet ist, wird der Transistorschalter T3 geöffnet, womit auch die Sendeeinheit 1 ihren Betrieb einstellt. Ein solcher Zähler 29 kann auch programmierbar für verschiedene Zeitdauern ausgebildet sein, indem ein Mikroprozessor 24 denselben ansteuert und seinerseits die entsprechende Information über einen Decodierer 23 gemäß der Figur 3 erhält. Auch bei diesem Ausführungsbeispiel wird die Zeitdauer für die Betriebszeit der Sendeeinheit 1 in dem Ladesignal des Energiesenders 5 codiert und in dem Energieempfänger 4 über einen Koppelkondensator C4 dem Decodierer 23 zugeführt.

Bei den bisher erläuterten Ausführungsbeispielen gemäß den Figuren 1 bis 3 beginnt die Sendeeinheit 1 der Schaltungsanordnung 18 unmittelbar nach der Ladephase des Energiespeichers 3 mit dem Senden, so daß diese Sendesignale sofort von der Signalempfangseinheit 2 der Schaltungsanordnung 19 detektierbar ist. Die Schaltungsanordnung 18 kann jedoch auch so ausgebildet sein, daß die Sendeeinheit 1 nach dem Ende der Ladephase zeitverzögert mit dem Senden beginnt. Hierzu wird dem Energiespeicher 3 ein Zeitverzögerungsglied unmittelbar nachgeschaltet, das die Zeitdauer bestimmt, nach welcher die Aussendung von Sendesignalen beginnt. Ein solches Verzögerungsglied kann wiederum programmierbar über einen Mikroprozessor ausgestaltet werden, wobei wiederum die Verzögerungszeit in dem Ladesignal vorliegt und über einen Decodierer dem Mikroprozessor zugeführt wird.

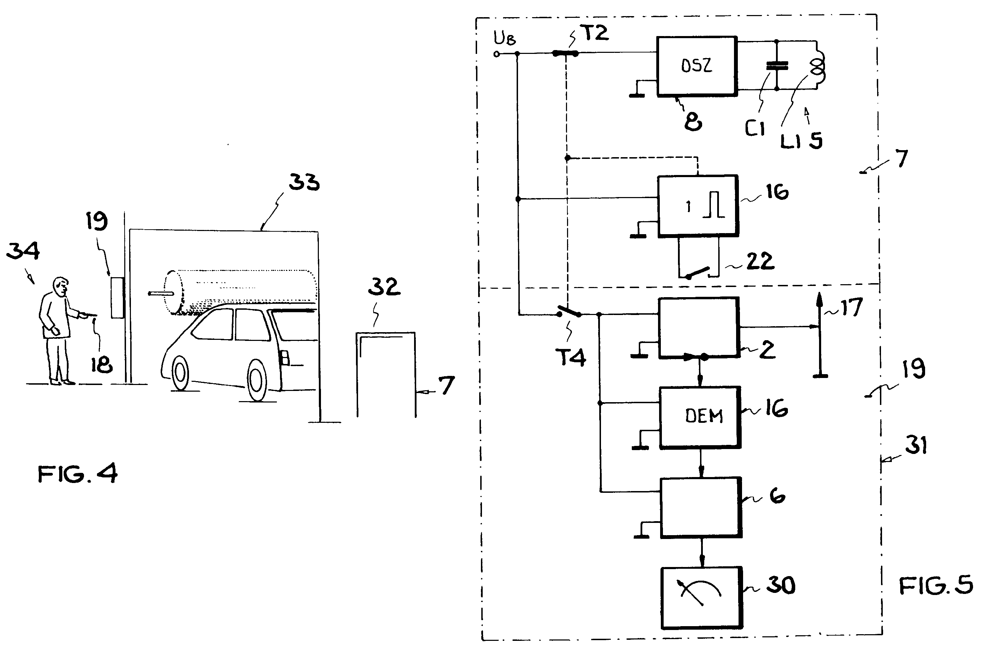

In Figur 4 ist eine Verwendung der erfindungsgemäßen Vorrichtung für eine Autowaschanlage dargestellt. Um eine solche Autowaschanlage 33 zu nutzen, besitzt ein Kunde 34 eine Kundenkarte, in der eine Schaltungsanordnung 18, wie sie in den Figuren 1 bis 3 beschrieben wurde, implementiert ist, also in der Art einer IC-Karte. Ein Automat 32 enthält eine Ladeschaltung 7 in der zuvor beschriebenen Art, die den Energiespeicher 3 der in der IC-Karte implementierten Schaltungsanordnung 18 auflädt. Der Automat stellt also eine Ladevorrichtung für den Energiespeicher dar. Der Waschanlage 33 ist eine Schaltungsanordnung 19 mit einer Signalempfangseinheit 2 zugeordnet, die bei Empfang der von der IC-Karte ausgesandten Sendesignale die Waschanlage zur Nutzung freigibt. Nachdem die Sendeeinheit 1 der Schaltungsanordnung 18 ihren Sendebetrieb wieder eingestellt hat, kann die Waschanlage 33 nicht mehr genutzt werden. Eine weitere Nutzung ist nur dann möglich, wenn der Kunde 34 die IC-Karte nach Zahlung einer Gebühr am Automaten 32 wieder aufladen läßt. Mit einer solchen erfindungsgemäßen Vorrichtung kann, wie dieses Beispiel zeigt, eine einfache und kostengünstige Möglichkeit geschaffen werden, eine zeitlich begrenzte Nutzungsberechtigung für Anlagen oder auch beispielsweise eine Zugangsberechtigung für Räume und Gebäude zu schaffen. Mit einer solchen erfindungsgemäßen Vorrichtung könnte beispielsweise die Nutzungsdauer für Sportanlagen, insbesondere für Hallenbäder kontrolliert werden, indem ebenfalls über eine "geladene" IC-Karte sowohl der Zugang zur Sportstätte als auch die Benutzung eines Kleiderschrankes erlaubt wird. Ist die über die IC-Karte definierte Nutzungsdauer abgelaufen, ist der Zugriff auf den Kleiderschrank nicht mehr möglich, sondern erst, wenn unter gleichzeitiger Bezahlung einer Gebühr der Energiespeicher der IC-Karte erneut aufgeladen wird.

Das Blockschaltbild gemäß der Figur 5 umfaßt eine Ladeschaltung 7 als auch eine Schaltungsanordnung 19 mit der Signalempfangseinheit 2 in einer einzigen Einheit 31. Eine solche Schaltungseinheit 31 kann beispielsweise in einem tragbaren Handgerät untergebracht sein, das sowohl zum Laden des Energiespeichers als auch zum Empfangen der von einer Sendeeinheit 1 erzeugten Sendesignale dient. Der Aufbau der Ladeschaltung 7 als auch der Aufbau der Schaltungsanordnung 19 entspricht demjenigen der Figur 1, wobei jedoch die Auswerteschaltung 6 der Schaltungsanordnung 19 eine Anzeigeeinheit 30, beispielsweise ein Meßgerät, ansteuert. Darüber hinaus steuert die monostabile Kippstufe 16 der Ladeschaltung 7 nicht nur den Transistorschalter T2 sondern auch einen Transistorschalter T4, der genau dann die Komponenten der Schaltungsanordnung 19 an die Betriebsspannungsquelle U_{B} anschließt, wenn die Ladephase abgeschlossen ist.

Ein Handgerät mit einer solchen Schaltungsanordnung 31 gemäß der Figur 5 kann mit Vorteil zur Ortung von Objekten dienen, denen eine Schaltungsanordnung 18 gemäß den Figuren 1 bis 3 zugeordnet ist. Beispielsweise können mit einer solchen Schaltungsanordnung 18 ausgerüstete entflogene Flugmodelle oder verworfene Bumerangs geortet und somit wiedergefunden werden. Vor jeder Nutzung solcher Objekte muß natürlich mit Hilfe des eine Ladevorrichtung beinhaltenden Handgerätes der Energiespeicher aufgeladen werden. Die Ortung des verlorenen Objektes erfolgt dadurch, daß die Auswerteeinheit 6 der Schaltungsanordnung 19 ein feldstärkeabhängiges Signal an die Anzeigeeinheit 30 weitergibt und dort angezeigt wird. Die Empfangsantenne 17 der Signalempfangseinheit 2 kann als Stabantenne ausgeführt sein, so daß die mit dieser Stabantenne empfangene Feldstärke richtungsabhängig wirkt. Die Richtung, in der das verlorene Objekt zu suchen ist, kann somit durch Ausrichten der Stabantenne in verschiedene Richtungen festgestellt werden, nämlich dort, wo der höchste Wert der Feldstärke empfangen wird. Zur besseren Feststellung der Richtcharakteristik der zu empfangenden Signale kann die Signalempfangseinheit 2 auch mit einem Mehrantennen-Diversity-System ausgerüstet sein. Hierzu können statt einer einzigen Stabantenne 17 beispielsweise drei in verschiedene Richtungen ausgerichtete Stab- oder Dipolantennen eingesetzt werden. Zur Auswertung der über die verschiedenen Antennen empfangenen Signale ist jedoch ein Mikroprozessor vorzusehen, der zusätzlich auch die Berechnung der Richtcharakteristik und deren Auswertung vornimmt. In diesem Fall ist auch eine Anzeigeeinheit vorzusehen, die unabhängig von der Orientierung der Antennen die Richtung anzeigt, in der das zu ortende Objekt sich befindet.

## Patentansprüche

1. Vorrichtung zum Überwachen von mit Sendeeinheiten ausgestatteten Objekten mit
a) einem Energiesender (5) zur drahtlosen Energieübertragung auf einen jeder Sendeeinheit (1) zugeordneten als Betriebsspannungsquelle dienenden aufladbaren Energiespeicher (3) mittels eines Energieempfängers (4) und
b) einer Signalempfangseinheit (2) zum Empfang der von der Sendeeinheit (1) eines Objektes erzeugten Sendesignale, wobei der Signalempfangseinheit (2) zur Auswertung der von derselben empfangenen Sendesignale eine Auswerteschaltung (6) nachgeschaltet, ist,
gekennzeichnet durch folgende Merkmale:
c) zur Ladung des Energiespeichers (3) wird der Energieempfänger (4) mit dem Energiesender (5) induktiv oder kapazitiv gekoppelt,
d) nach der Ladephase des Energiespeichers (3) beginnt die Sendeeinheit (1) mit dem Aussenden von Sendesignalen unter gleichzeitiger Entladung des Energiespeichers (3),
e) nach einer bestimmten Entladedauer stellt die Sendeeinheit (1) die Aussendung von Sendesignalen ein und
f) während der begrenzten Sendedauer der Sendeeinheit (1) erfolgt die Uberwachung des Objektes.

2. Vorrichtung nach Anspruch 1, dadurch gekennzeichnet, daß die Sendeeinheit (1) sofort nach Abschluß der Ladephase zu senden beginnt.

3. Vorrichtung nach Anspruch 1, dadurch gekennzeichnet, daß die Sendeeinheit (1) nach Abschluß der Ladephase zeitverzögert zu senden beginnt.

4. Vorrichtung nach Anspruch 1, dadurch gekennzeichnet, daß der Energiesender (5) ein auf eine bestimmte Ladefrequenz abgestimmten, von einem Oszillator (8) gespeisten Schwingkreis (C1, L1) umfaßt und daß der Energieempfänger (4) als ein auf die Ladefrequenz abgestimmter Resonanzkreis (C2, L2) aufgebaut ist.

5. Vorrichtung nach Anspruch 4, dadurch gekennzeichnet, daß der Resonanzkreis (C2, L2) des Energieempfängers (4) mit einem Gleichrichterelement (D) derart verbunden ist, daß die von dem Resonanzkreis (C2, L2) aufgenommene elektrische Energie gleichgerichtet und dem Energiespeicher (3) zugeführt wird.

6. Vorrichtung nach einem der Ansprüche 4 bis 5, dadurch gekennzeichnet, daß der Energieempfänger (4) während des Ladens des Energiespeichers (3) in unmittelbarer räumlicher Nachbarschaft zum Energiesender (5) angeordnet ist.

7. Vorrichtung nach einem der vorangehenden Ansprüche, dadurch gekennzeichnet, daß die Signalempfangseinheit (2) sofort nach dem Ende der Ladephase in Betrieb geht.

8. Vorrichtung nach einem der vorangehenden Ansprüche, dadurch gekennzeichnet, daß die Sendeeinheit (1) von einer Steuereinheit (9) angesteuert wird und daß diese Steuereinheit (9) an den Energiespeicher (3) angeschlossen ist.

9. Vorrichtung nach Anspruch 8, dadurch gekennzeichnet, daß die Steuereinheit (9) die Sendeeinheit (1) derart ansteuert, daß sie getaktete Sendesignale erzeugt.

10. Vorrichtung nach Anspruch 9, dadurch gekennzeichnet, daß die Steuereinheit (9) aus einer astabilen Kippstufe (10) und einer nachgeschalteten Differenzierstufe (11) derart aufgebaut ist, daß ein von der astabilen Kippstufe (10) erzeugtes Rechtecksignal der Differenzierstufe (11) zugeführt wird und daß schließlich ein zur Taktung der Sendeeinheit (1) vorgesehener Transistorschalter (T1) von dem Ausgang der Differenzierstufe (11) gesteuert wird.

11. Vorrichtung nach einem der vorangehenden Ansprüche, dadurch gekennzeichnet, daß für die Sendeeinheiten (1) eine gewisse Anzahl von Sendefrequenzen vorgesehen sind, daß werksseitig gebildeten Gruppen von Objekten jeweils eine dieser Sendefrequenzen derart zugeordnet werden, daß die Sendeeinheiten (1) der zu einer Gruppe gehörenden Objekten jeweils auf der gleichen Frequenz senden, daß jedes Objekt eine Kennung zur Identifizierung der Sendefrequenz aufweist und daß die Empfangsfrequenz der Signalempfangseinheiten (2) auf diese Sendefrequenzen einstellbar sind.

12. Vorrichtung nach einem der Ansprüche 4 bis 10, dadurch gekennzeichnet, daß die Ladesignale des Energiesenders (5) eine Codierung aufweisen, daß durch diese Codierung eine bestimmte Sendefrequenz der Sendeeinheit (1) einstellbar ist und daß die Signalempfangseinheit (2) auf dieser bestimmten Sendefrequenz empfangsbereit ist.

13. Vorrichtung nach Anspruch 12, dadurch gekennzeichnet, daß zur Decodierung des codierten Ladesignales und zur Sendefrequenzeinstellung des Oszillators (13) der Sendeeinheit (1) ein Mikroprozessor (24) vorgesehen ist, der einen Decodierer (23), einen programmierbaren Frequenzteiler (25) und einen PLL-Schaltkreis (27) ansteuert.

14. Vorrichtung nach einem der vorangehenden Ansprüche, dadurch gekennzeichnet, daß der Energiesender (5) und die Signalempfangseinheit (2) eine Einheit bilden, daß zur Steuerung derselben eine monostabile Kippstufe (16) vorgesehen ist, daß nur während des instabilen Zustandes der monostabilen Kippstufe (16) der Energiesender (5) aktiv und die Signalempfangseinheit (2) inaktiv ist und daß umgekehrt nur während des stabilen Zustandes der monostabilen Kippstufe (16) die Signalempfangseinheit (2) empfangsbereit ist.

15. Vorrichtung nach einem der vorangehenden Ansprüche, dadurch gekennzeichnet, daß die Auswerteschaltung (6) zur Ortung eines Objektes ein von der Feldstärke des Sendesignales abhängiges Signal einer Anzeigeeinheit (30) zuführt und daß der Wert dieser Feldstärke von der Orientierung einer der Signalempfangseinheit (2) zugeordneten Antenne (17) und deren Entfernung vom zu ortenden Objekt abhängt.

16. Vorrichtung nach einem der Ansprüche 1 bis 14, dadurch gekennzeichnet, daß die Signalempfangseinheit (2) zur Feststellung der Richtcharakteristik des Sendesignales mit einem Mehrantennen-Diversity-System ausgerüstet ist.

17. Vorrichtung nach Anspruch 16, dadurch gekennzeichnet, daß eine der Auswerteschaltung (6) nachgeschalte ten Anzeigeeinheit (30) unabhängig von der Orientierung der Antennen die Richtung angibt, in der das zu suchende Objekt sich befindet.

18. Vorrichtung nach einem der vorangehenden Ansprüche, dadurch gekennzeichnet, daß die Anzeigeeinheit (30) optische und/oder akustische Signale abgibt.

19. Vorrichtung nach einem der vorangehenden Ansprüche, dadurch gekennzeichnet, daß der Energiespeicher (3) ein Kondensator ist.

20. Verwendung der Vorrichtung nach einem der vorangehenden Ansprüche zur Ortung von verlorenen Objekten.

21. Verwendung der Vorrichtung nach einem der Ansprüche 1 bis 13 als Überwachungssystem für Objekte in einer Produktionslinie mit mehreren Signalempfangseinheiten.

22. Verwendung der Vorrichtung nach einem der Ansprüche 1 bis 13 für eine zeitlich begrenzte Nutzungsberechtigung.

## Claims

1. Device for monitoring objects equipped with transmitter units including
a) an energy transmitter (5) for the wireless transmission of energy by way of an energy receiver (4) to a chargeable energy store (3) serving as an operating voltage source associated with each transmitter unit (1) and
b) a signal receiving unit (2) for the reception of the transmitted signals generated by the transmitter unit (1) of an object, wherein there is connected subsequently of the signal receiving unit (2) an evaluating circuit (6) for the evaluation of the transmitted signals received thereby,
characterised by the following features:
c) the energy receiver (4) is coupled inductively or capacitively to the energy transmitter (5) for charging the energy store (3),
d) after the charging phase of the energy store (3), the transmitter unit (1) begins the transmission of transmit signals with simultaneous discharging of the energy store (3),
e) after a specific discharging period, the transmitter unit (1) stops the transmission of transmit signals and
f) the monitoring of the object occurs during the limited transmission period of the transmitter unit (1).

2. Device in accordance with Claim 1, characterised in that, the transmitter unit (1) begins to transmit immediately after the termination of the charging phase.

3. Device in accordance with Claim 1, characterised in that, the transmitter unit (1) begins to transmit after a time delay following the termination of the charging phase.

4. Device in accordance with Claim 1, characterised in that, the energy transmitter (5) comprises an oscillatory circuit (C1, L1) which is fed by an oscillator (8) and is tuned to a specific charging frequency, and that the energy receiver (4) is constructed as a resonant circuit (C2, L2) which is tuned to the charging frequency.

5. Device in accordance with Claim 4, characterised in that, the resonant circuit (C2, L2) of the energy receiver (4) is connected to a rectifying element (D) in such a way that the electrical energy picked up by the resonant circuit (C2, L2) is rectified and supplied to the energy store (3).

6. Device in accordance with any of the Claims 4 to 5, characterised in that, the energy receiver (4) is arranged in the direct spatial vicinity of the energy transmitter (5) during the charging of the energy store (3).

7. Device in accordance with any of the preceding Claims, characterised in that, the signal receiving unit (2) becomes operational immediately after the end of the charging phase.

8. Device in accordance with any of the preceding Claims, characterised in that, the transmitter unit (1) is controlled by a control unit (9) and that this control unit (9) is connected to the energy store (3).

9. Device in accordance with Claim 8, characterised in that, the control unit (9) controls the transmitter unit (1) in such a way that it generates pulsed transmission signals.

10. Device in accordance with Claim 9, characterised in that, the control unit (9) is constructed from an astable trigger stage (10) and a subsequently connected differentiating stage (11) in such a way that a rectangular signal generated by the astable trigger stage (10) is supplied to the differentiating stage (11) and that thereafter a transistor switch (T1) provided for periodically pulsing the transmitter unit (1) is controlled by the output of the differentiating stage (11).

11. Device in accordance with any of the preceding Claims, characterised in that, a certain number of transmitting frequencies are provided for the transmitter units (1), that factory-formed groups of objects are associated with a respective one of these transmitting frequencies in such a way that the transmitter units (1) of the objects belonging to a group respectively transmit on the same frequency, that each object has an identification code for identifying the transmitting frequency and that the receiving frequencies of the signal receiving units (2) can be set to these transmitting frequencies.

12. Device in accordance with any of the Claims 4 to 10, characterised in that, the charging signals of the energy transmitter (5) exhibit a coding, that a specific transmitting frequency of the transmitter unit (1) can be set by this coding and that the signal receiving unit (2) is ready for reception at this specific transmitting frequency.

13. Device in accordance with Claim 12, characterised in that, for decoding the coded charging signal and for setting the transmitting frequency of the oscillator (13) of the transmitter unit (1), there is provided a microprocessor (24) which controls a decoder (23), a programmable frequency divider (25) and a PLL circuit (27).

14. Device in accordance with any of the preceding Claims, characterised in that, the energy transmitter (5) and the signal receiving unit (2) form a unit, that a monostable trigger circuit (16) is provided for controlling the latter, that the energy transmitter (5) is active and the signal receiving unit (2) is inactive only during the unstable state of the monostable trigger circuit (16) and that conversely, the signal receiving unit (2) is only ready for reception during the stable state of the monostable trigger circuit (16).

15. Device in accordance with any of the preceding Claims, characterised in that, the evaluating circuit (6) for locating an object supplies a signal dependent on the field strength of the transmitted signal to a display unit (30) and that the value of this field strength depends on the orientation of an antenna (17) associated with the signal receiving unit (2) and its distance from the object which is to be located.

16. Device in accordance with any of the Claims 1 to 14, characterised in that, the signal receiving unit (2) is equipped with a multiple-antennae diversity system for determining the radiation pattern of the transmitted signal.

17. Device in accordance with Claim 16, characterised in that, a display unit (30) connected subsequently of the evaluating circuit (6) indicates the direction in which the object being sought is located, independently of the orientation of the antennae.

18. Device in accordance with any of the preceding Claims, characterised in that, the display unit (30) emits optical and/or acoustic signals.

19. Device in accordance with any of the preceding Claims, characterised in that, the energy store (3) is a capacitor.

20. Use of the device in accordance with any of the preceding Claims for locating lost objects.

21. Use of the device in accordance with any of the Claims 1 to 13 as a monitoring system for objects on a production line having a plurality of signal receiving units.

22. Use of the device in accordance with any of the Claims 1 to 13 for a time limited authorised usage.

## Revendications

1. Dispositif pour surveiller des objets munis d'unités d'émission, comprenant
a) un émetteur d'énergie (5) pour la transmission sans fil d'énergie, au moyen d'un récepteur d'énergie (4), à un accumulateur d'énergie (3) chargeable, coordonné à chaque unité d'émission (1) et servant de source de tension de service, et
b) une unité réceptrice de signaux (2) pour la réception des signaux d'émission générés par l'unité d'émission (1) d'un objet, l'unité réceptrice de signaux (2) étant suivie d'un circuit d'exploitation (6) pour exploiter les signaux d'émission reçus de cette unité,
caractérisé en ce que:
c) pour charger l'accumulateur d'énergie (3), le récepteur d'énergie (4) est couplé par voie inductive ou capacitive à l'émetteur d'énergie (5),
d) après la phase de charge de l'accumulateur d'énergie (3), l'unité d'émission (1) commence à émettre des signaux d'émission, en déchargeant en même temps l'accumulateur d'énergie (3),
e) après une durée de décharge déterminée, l'unité d'émission (1) arrête d'émettre des signaux d'émission et
f) l'objet est surveillé pendant la durée d'émission limitée de l'unité d'émission (1).

2. Dispositif selon la revendication 1, caractérisé en ce que l'unité d'émission (1) commence à émettre immédiatement après la fin de la phase de charge.

3. Dispositif selon la revendication 1, caractérisé en ce que l'unité d'émission (1) commence à émettre avec un retard après la fin de la phase de charge.

4. Dispositif selon la revendication 1, caractérisé en ce que l'émetteur d'énergie (5) comporte un circuit oscillant (C1, L1) accordé sur une fréquence de charge déterminée et alimenté par un oscillateur (8), et que le récepteur d'énergie (4) est conçu comme un circuit résonnant (C2, L2) accordé sur la fréquence de charge.

5. Dispositif selon la revendication 4, caractérisé en ce que le circuit résonnant (C2, L2) du récepteur d'énergie (4) est relié à un élément redresseur (D), de manière que l'énergie électrique reçue par le circuit résonnant (C2, L2) soit redressée et amenée à l'accumulateur d'énergie (3).

6. Dispositif selon la revendication 4 ou 5, caractérisé en ce que le récepteur d'énergie (4) est placé à proximité spatiale immédiate de l'émetteur d'énergie (5) pendant la charge de l'accumulateur d'énergie (3).

7. Dispositif selon une des revendications précédentes, caractérisé en ce que l'unité réceptrice de signaux (2) entre en service immédiatement après la fin de la phase de charge.

8. Dispositif selon une des revendications précédentes, caractérisé en ce que l'unité d'émission (1) est pilotée par une unité de commande (9) et que cette unité de commande (9) est raccordée à l'accumulateur d'énergie (3).

9. Dispositif selon la revendication 8, caractérisé en ce que l'unité de commande (9) pilote l'unité d'émisson (1) de manière que celle-ci génère des signaux d'émission rythmés.

10. Dispositif selon la revendication 9, caractérisé en ce que l'unité de commande (9) est constituée d'un étage basculeur astable (10) et d'un étage différentiateur (11) monté à sa suite, de manière qu'un signal rectangulaire généré par l'étage basculeur astable (10) soit amené à l'étage différentiateur (11) et que, finalement, un transistor commutateur (T1), prévu pour rythmer l'unité d'émission (1), soit commandé par la sortie de l'étage différentiateur (11).

11. Dispositif selon une des revendications précédentes, caractérisé en ce qu'un certain nombres de fréquences d'émission est prévu pour les unités d'émission (1), que l'une de ces fréquences est coordonnée chaque fois à l'un de plusieurs groupes d'objets formés à l'usine, de manière que les unités d'émission (1) des objets appartenant à un même groupe émettent chaque fois sur la même fréquence, que chaque objet présente un marquage pour l'identification de la fréquence d'émission et que la fréquence de réception des unités réceptrices de signaux (2) est réglable sur ces fréquences d'émission.

12. Dispositif selon une des revendications 4 à 10, caractérisé en ce que les signaux de charge de l'émetteur d'énergie (5) présentent un codage, qu'une fréquence d'émission déterminée de l'unité d'émission (1) est réglable au moyen de ce codage et que l'unité réceptrice de signaux (2) est prête à recevoir sur cette fréquence d'émission déterminée.

13. Dispositif selon la revendication 12, caractérisé en ce que, pour décoder le signal de charge codé et régler la fréquence d'émission de l'oscillateur (13) de l'unité d'émission (1), on a prévu un microprocesseur (24) qui pilote un décodeur (23), un diviseur de fréquence programmable (25) et un circuit (27) formant une boucle à verrouillage de phase.

14. Dispositif selon une des revendications précédentes, caractérisé en ce que l'émetteur d'énergie (5) et l'unité réceptrice de signaux (2) forment une seule unité, qu'un étage basculeur monostable (16) est prévu pour piloter cette unité, que l'émetteur d'énergie (5) est seulement actif et l'unité réceptrice de signaux (2) est seulement inactive pendant l'état instable de l'étage basculeur monostable (16) et que, inversement, l'unité réceptrice de signaux (2) est seulement prête à recevoir pendant l'état stable de l'étage basculeur monostable (16).

15. Dispositif selon une des revendications précédentes, caractérisé en ce que, en vue de la localisation d'un obet, le circuit d'exploitation (6) envoie un signal fonction de l'intensité de champ du signal d'émission à une unité d'affichage (30) et que la valeur de cette intensité de champ dépend de l'orientation d'une antenne (17) coordonnée à l'unité réceptrice de signaux (2) et de sa distance de l'objet à localiser.

16. Dispositif selon une des revendications 1 à 14, caractérisé en ce que l'unité réceptrice de signaux (2) est équipée d'un système de réception en diversité comportant plusieurs antennes en vue de la détermination du diagramme de directivité du signal d'émission.

17. Dispositif selon la revendication 16, caractérisé en ce qu'une unité d'indication ou d'affichage (30), montée à la suite du circuit d'exploitation (6), indique, indépendamment de l'orientation des antennes, la direction dans laquelle se trouve l'objet à chercher.

18. Dispositif selon une des revendications précédentes, caractérisé en ce que l'unité d'indication (30) délivre des signaux optiques et/ou acoustiques.

19. Dispositif selon une des revendications précédentes, caractérisé en ce que l'accumulateur d'énergie (3) est un condensateur.

20. Utilisation du dispositif selon une des revendications précédentes pour localiser des objets perdus.

21. Utilisation du dispositif selon une des revendications 1 à 13 comme système de surveillance d'objets dans une ligne de production comportant plusieurs unités réceptrices de signaux.

22. Utilisation du dispositif selon une des revendications 1 à 13 pour une autorisation d'utilisation limitée dans le temps.
